# EUROPÄISCHE PATENTSCHRIFT

(11) **EP 1 407 309 B1**
(45) Veröffentlichungstag und Bekanntmachung des Hinweises auf die Patenterteilung: **14.09.2005**
(21) Anmeldenummer: 02767052.0
(22) Anmeldetag: 18.07.2002
(51) Int. Cl.: G02B 26/08, G02B 26/10, G01S 17/00, B60Q 1/52

(54) **VERFAHREN ZUM OPTISCHEN ABTASTEN EINER SZENE**
METHOD FOR OPTICALLY SCANNING A SCENE
PROCEDE DE BALAYAGE OPTIQUE D'UNE SCENE

(30) Priorität: 19.07.2001 DE 10135107
(43) Veröffentlichungstag der Anmeldung: 14.04.2004
(73) Patentinhaber: Automotive Distance Control Systems GmbH, 88131 Lindau (DE)
(72) Erfinder: KRAUS, Robert, 83308 Trostberg (DE); MEHR, Wilfried, 6900 Bregenz (AU); SCHANZ, Holger, 88131 Lindau (DE)
(74) Vertreter: Graf, Ulrich
(86) Internationale Anmeldenummer: PCT/DE2002/002675
(87) Internationale Veröffentlichungsnummer: WO 2003/009044

(56) Entgegenhaltungen:
- DE-A- 3 707 023
- DE-A- 4 115 747
- DE-A- 4 239 061
- DE-A- 19 530 281

## Beschreibung

Die Erfindung betrifft ein Verfahren zum optischen Abtasten einer Szene gemäß dem Oberbegriff des Patentanspruchs 1.

Ein derartiges Verfahren ist beispielsweise aus der DE 41 15 747 C2 bekannt. Bei diesem vorbekannten Verfahren wird ein Lichtstahl üblicherweise über ein optisches System, welches ein planparalleles Prisma und eine Lixisenvorrichtung umfasst, auf die abzutastende Szene abgebildet. Der Lichtstrahl wird dabei im Prisma um einen vom Kippwinkel des Prismas abhängigen Wert gebrochen. Aufgrund der Parallelität der Brechungsebenen des Prismas sind der ins Prisma eintretende Lichtstrahl und der aus dem Prisma austretende Lichtstrahl um einen vom Kippwinkel abhängigen Wert gegeneinander parallel versetzt. Durch die Rotation des Prismas wird dieser Versatz variiert und der Lichtstrahl somit über die abzutastende Szene bewegt. Der wesentliche Nachteil dieses Verfahrens beseht darin, dass der Auslenkwinkel des die Szene abtastenden Lichtstrahls gering ist.

Weitere derartige Verfahren sind aus DE 195 30281, DE 4 239 061 und DE 3 707 023 bekannt.

Der Erfindung liegt daher die Aufgabe zugrunde, ein Verfahren gemäß den Oberbegriff des Patentanspruchs 1 anzugeben, mit dem ein möglichst großer Winkelbereich der Szene abgetastet werden kann.

Die Aufgabe wird durch die Merkmale des Patentanspruchs 1 gelöst. Vorteilhafte Ausgestaltungen und Weiterbildungen ergeben sich aus den Unteransprüchen.

Erfindungsgemäß wird der abtastend Lichtstrahl durch Totalreflexion an einer Seitenwand eines rotierenden Prismas auf die abzutastende Szene abgelenkt und durch Rotation des Prismas über die Szene bewegt. Die Bewegung des Lichtstrahls resultiert dabei aus der durch die Rotation des Prismas bedingten Änderung des Reflexionswinkels des Lichtstrahls.

Der aus dem Prisma austretende Lichtstrahl wird vorzugsweise über eine Linsenvorrichtung auf die abzutastende Szene abgebildet.

In einer vorteilhaften Weiterbildung des Verfahrens wird ein Anteil des abtastenden Lichtstrahls, der an der Szene reflektiert wird, durch Totalreflexion an einer Seitenwand des rotierenden Prismas oder eines weiteren rotierenden Prismas auf einen Photodetektor abgelenkt. Vorzugsweise wird der an der Szene reflektierte Anteil des abtastenden Lichtstrahls dabei über eine weitere Linsenvorrichtung geführt, die zwischen der Szene und dem Prisma bzw. dem weiteren Prisma vorgesehen ist. Das Prisma und das weitere Prisma sind vorzugsweise gleichartig ausgeführt und werden vorzugsweise mit gleicher Drehgeschwindigkeit um die gleiche Drehachse gedreht. Denkbar ist aber auch eine Drehung um unterschiedliche zueinander parallele Drehachsen.

Der abtastende Lichtstrahl wird vorzugsweise mittels einer Laserlichtquelle, insbesondere mittels einer Infrarot-Laserdiode, erzeugt.

Das erfindungsgemäße Verfahren weist folgende Vorteile auf:

Es lässt sich auf einfache Weise mit Mitteln durchführen, die kostengünstig und mit geringem technischen Aufwand herstellbar sind.

Es ermöglicht die Erfassung eines großen Winkelbereichs der abzutastenden Szene.

Es ermöglicht den Aufbau einer eine geringe Bauhöhe aufweisenden optischen Abtastvorrichtung, wobei die Bauhöhe auch bei der Verwendung einer Linsenvorrichtung nicht wesentlich von der Brennweite der Linsenvorrichtung bestimmt wird. Durch zusätzliche Spiegelumlenkungen lässt sich der Bauraum weiter reduzieren.

Es weist aufgrund der Größe der Austrittsöffnung des Lichtstrahls eine geringe Empfindlichkeit gegenüber Verschmutzungen auf.

Es ist in Systemen zur Unterstützung der Fahrer von Kraftfahrzeugen, insbesondere in Abstandsregelsystemen für Kraftfahrzeuge, zur Objekterkennung und/oder Abstandsermittlung einsetzbar.

Die Erfindung wird nachfolgend anhand von Ausführungsbeispielen und Figuren näher erläutert. Es zeigen:
- Figur 1: eine Prinzipdarstellung eines Sendeteils einer zur Durchführung des erfindungsgemäßen Verfahrens vorgesehenen optischen Abtastvorrichtung,
- Figur 2: eine Prinzipdarstellung eines Empfangsteils der optischen Abtastvorrichtung.

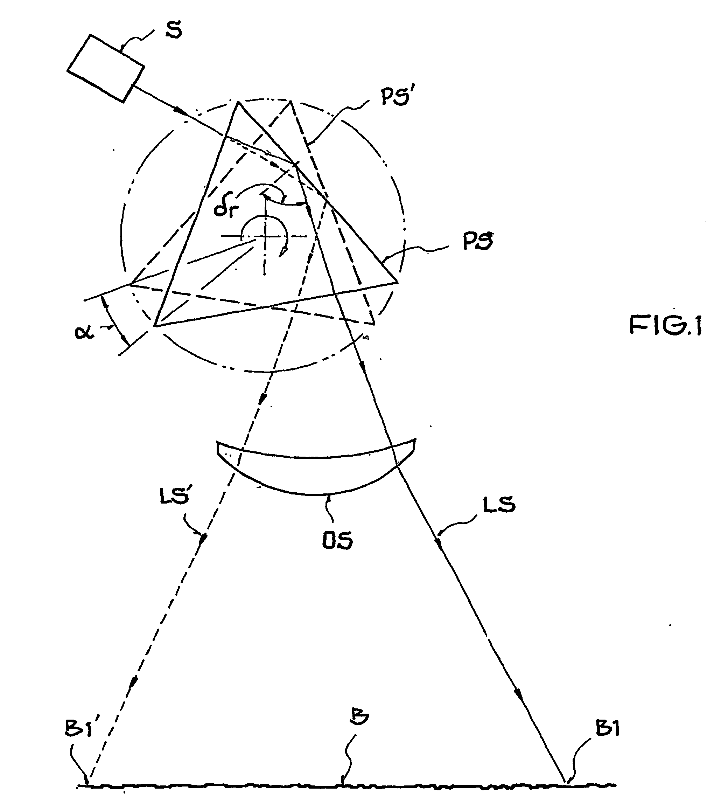

Gemäß Figur 1 umfasst der Sendeteil einer optischen Abtastvorrichtung zur Durchführung des erfindungsgemäßen Verfahrens eine, beispielsweise als Infrarot-Laserdiode ausgeführte Lichtquelle S, ein Prisma PS mit gleichseitigem Querschnitt und eine, beispielsweise als Fresnellinse ausgeführte Linsenvorrichtung OS. Die Lichtquelle S sendet von einer festen Position aus einen Lichtstrahl LS in Richtung des Prismas PS aus. Der Lichtstrahl LS dringt dabei in das Prisma PS ein, wird im Prisma PS an einer Seitenwand des Prismas PS durch Totalreflexion abgelenkt und tritt anschließend aus dem Prisma PS wieder aus. Beim Eintritt in das Prisma PS und beim Austritt aus dem Prisma PS wird der Lichtstrahl in Abhängigkeit der Winkellage des Prismas PS ggf. gebrochen. Nach dem Austritt aus dem Prisma PS wird der Lichtstrahl LS über die Linsenvorrichtung OS auf die abzutastende Szene B abgebildet, d. h. die Lichtquelle S beleuchtet den Punkt B1 der Szene B.

Das Prisma PS wird während des Abtastvorgangs rotiert. Durch die Drehung um einen Winkel α wird das Prisma PS in die gestrichelt dargestellte Position PS' gebracht. Hierdurch ändert sich auch die Auslenkung des Lichtstrahls. Insbesondere ändert sich der Reflexionswinkel δr des Lichtstrahls im Prisma, so dass der Lichtstrahl nunmehr dem gestrichelt gezeichneten Weg LS' folgt und die Lichtquelle S somit den Punkt B1' der Szene B beleuchtet.

Durch die Rotation des Prismas PS wird der Lichtstrahl LS somit über die Szene B bewegt und die Szene B damit zeilenweise abgetastet.

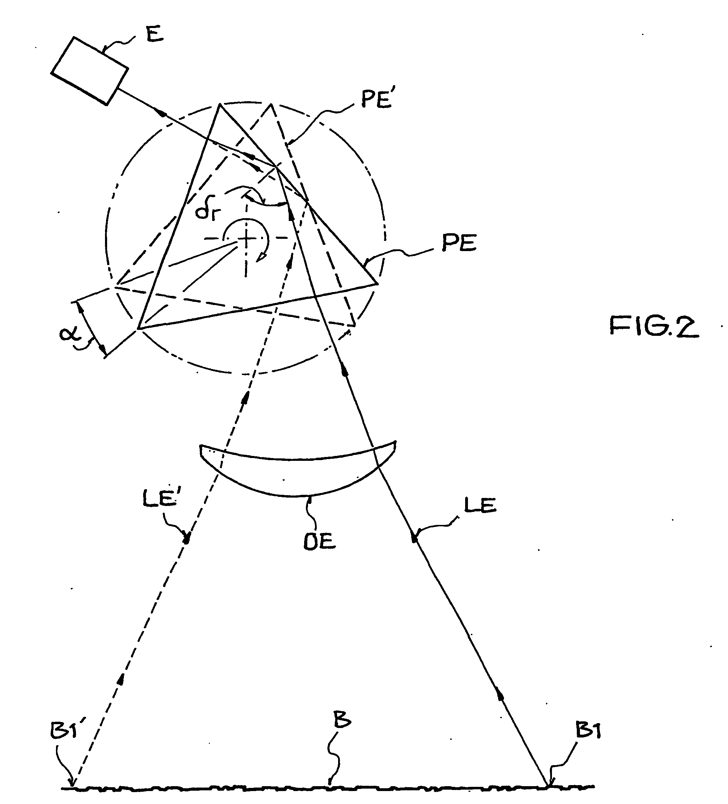

Gemäß Figur 2 ist der Empfangsteil der Abtastvorrichtung analog zum Sendeteil aufgebaut. So weist der Empfangsteil ein dem Prisma PS des Sendeteils gleichartiges weiteres Prisma PE auf sowie eine der Linsenvorrichtung OS des Sendeteils gleichartige weitere Linsenvorrichtung OE auf. Statt der Lichtquelle S weist der Empfangsteil jedoch einen Photodetektor E auf, der als Detektorelement, beispielsweise als Pin-Diode ausgeführt ist.

Das weitere Prisma PE wird in gleicher Weise wie das Prisma PS gedreht. Die Prismen PS, PE sind vorteilhafterweise nebeneinander starr miteinander verbunden und werden somit um die gleiche Drehachse mit gleicher Drehgeschwindigkeit gedreht. Denkbar ist auch, die Prismen PE, PS mit gleicher Drehgeschwindigkeit um zueinander parallele Drehachsen zu drehen.

Wenn das Prisma PS des Sendeteils sich in der in Figur 1 mit durchgezogenen Linien dargestellten Position befindet, dann befindet sich auch das weitere Prisma PE des Empfangsteils in der in Figur 2 mit durchgezogenen Linien dargestellten Position.

In diesem Fall wird der von der Lichtquelle S beleuchtete Punkt B1 der Szene B über die weitere Linsenvorrichtung OE und das weitere Prisma PE auf den Photodetektor E abgebildet. Das heißt, der am Punkt B1 der Szene B reflektierte Anteil des Lichtstrahls LS wird als Reflexionsstrahl LE über die weitere Linsenvorrichtung OE zum weiteren Prisma PS geführt, dringt ins weitere Prisma PS ein, wird dabei ggf. gebrochen, trifft auf eine Seitenwand des weiteren Prismas PS, wird an dieser Seitenwand durch Totalreflexion umgelenkt, tritt dann aus dem weiteren Prisma PS aus, wobei er beim Austritt ggf. gebrochen wird, und trifft schließlich auf Photodetektor E auf.

Wird das Prisma PS des Sendeteils in die in Figur 1 gestrichelt dargestellte Position PS' gebracht, dann wird auch das weitere Prisma PE in die in Figur 2 gestrichelt dargestellte Position PE' gebracht. Der in diesem Fall von der Lichtquelle S beleuchtete Punkt B1' der Szene B wird dann über die weitere Linsenvorrichtung OE und das weitere Prisma PS ebenfalls auf den Photodetektor E abgebildet. Das heißt, der am Punkt B1' reflektierte Anteil des Lichtstrahls LS' wird als Reflexionsstrahl entlang des Weges LE' über die weitere Linsenvorrichtung OE zum weiteren Prismas PE und über dieses zum Photodetektor E geführt und er wird dabei im weiteren Prisma an einer der Seitenwände dieses Prismas ebenfalls durch Totalreflexion umgelenkt.

Durch die zueinander synchrone Drehung der Prismen PE, PS erreicht man somit, dass jeweils derjenige Punkt der Szene B, auf den die Lichtquelle S über das Prisma PS und die Linsenvorrichtung OS abgebildet wird, im Empfangsteil über die weitere Linsenvorrichtung OE und das weitere Prisma PE auf den Photodetektor E abgebildet wird. Der Photodetektor E gibt somit eine Signal ab, das ein Maß des Reflexionsfaktors der Szene B an demjenigen Punkt ist, auf den die Lichtquelle S abgebildet wird.

Im vorliegenden Ausführungsbeispiel weist die Abtastvorrichtung zwei gleiche Prismen PS, PE auf, eines für den Sendeteil und eines für den Empfangsteil. In dem Falle, dass die Prismen PS, PE starr miteinander verbunden sind und um die gleiche Drehachse rotieren, können die beiden Prismen auch jeweils an einer ihrer Stirnseiten, also an einer zur Drehachse senkrechten Fläche, miteinander verklebt sein. Die beiden Prismen sind dann zu einem zweiteiligen Prisma zusammengefasst. Denkbar ist daher auch die Verwendung eines einteiligen Prismas, bei dem ein Abschnitt dem Prisma PS des Sendeteils und der benachbarte Abschnitt dem Prisma PE des Empfangsteils entspricht.

Im vorliegenden Ausführungsbeispiel ist die Abtastvorrichtung Bestandteil eines Systems zur Unterstützung des Fahrers eines Kraftfahrzeugs, insbesondere eines Abstandsregelsystems für Kraftfahrzeuge. Mit der Abtastvorrichtung wird dabei die in Fahrtrichtung vor dem Kraftfahrzeug befindliche Szene abgetastet, mit dem Ziel, durch Anwendung von Mustererkennungsalgorithmen vor dem Kraftfahrzeug befindliche Objekte, insbesondere vorausfahrende Fahrzeuge, zu erkennen und/oder den Abstand zwischen dem Kraftfahrzeug und einem vor dem Kraftfahrzeug befindlichen Objekt durch Auswertung der Signallaufzeit des als Lichtstrahl LS ausgesendeten und als Reflexionsstrahl LE reflektierten Signals zu ermitteln. Anhand des ermittelten Abstands wird dann geprüft, ob der Sicherheitsabstand zum vorausfahrenden Fahrzeug eingehalten wird und ggf. ein Warnsignal an den Fahrer abgegeben, oder es wird eine automatische Abstandsregelung des Abstands zu einem vorausfahrenden Fahrzeug vorgenommen.

Mit der Abtastvorrichtung lässt sich auch der bezüglich dem Kraftfahrzeug seitliche Fahrbahnbereich abtasten, mit dem Ziel, Fahrbahnmarkierungen, die zur Abgrenzung der Fahrspuren auf der Fahrbahn vorgesehen sind, zu erkennen und den Fahrer vor einem Verlassen der Fahrspur zu warnen oder eine automatisch Fahrspurhaltung zu gewährleisten.

## Patentansprüche

1. Verfahren zum optischen Abtasten einer Szene (B) mit einem abtastenden Lichtstrahl (LS),
a) wobei der abtastende Lichtstrahl (LS) durch Totalreflexion an einer Seitenwand eines rotierenden Prismas (PS) auf die abzutastende Szene (B) abgelenkt wird und durch Rotation des Prismas (PS) über die Szene (B) bewegt wird,
**dadurch gekennzeichnet, daß**
das Prisma und dessen Rotationsachse zum Lichtstrahl so ausgerichtet sind, daß der Lichtstrahl
b1) an einer ersten Seitenfläche in das Prisma eindringt, wobei der Lichtstrahl abhängig von der Winkellage des Prismas gebrochen wird,
b2) an einer zweiten Seitenfläche durch die Totalreflexion abgelenkt wird, wobei sich der Reflexionswinkel des Lichtstrahls im Prisma mit der Rotation des Prismas ändert, und
b3) an einer dritten Seitenfläche austritt, wobei der Lichtstrahl wiederum abhängig von der Winkellage des Prismas gebrochen wird.

2. Verfahren nach Anspruch 1,
**dadurch gekennzeichnet,**
**dass** der abtastende Lichtstrahl (LS) nach seiner Ablenkung im rotierenden Prisma (PS) über eine Linsenvorrichtung (OS) auf die Szene (B) abgebildet wird.

3. Verfahren nach Anspruch 1 oder 2,
**dadurch gekennzeichnet,**
**dass** ein an der Szene reflektierter Anteil (LE) des abtastenden Lichtstahls (LS) durch Totalreflexion an einer Seitenwand des rotierenden Prismas (PS) oder eines dem rotierenden Prisma gleichartigen weiteren rotierenden Prismas (PE) auf einen Photodetektor (E) abgelenkt wird.

4. Verfahren nach Anspruch 3,
**dadurch gekennzeichnet,**
**dass** der an der Szene (B) in Richtung des Photodetektors (E) reflektierte Anteil (LE) des abtastenden Lichtstrahls (LS) über eine weitere Linsenvorrichtung (OS) und das rotierende Prisma (PS) oder das weitere rotierende Prisma (PE) auf den Photodetektor (E) abgebildet wird.

5. Verfahren nach einem der Ansprüche 3 oder 4,
**dadurch gekennzeichnet,**
**dass** das rotierende Prisma (PS) und das weitere rotierende Prisma (PE) mit gleicher Drehgeschwindigkeit um die gleiche Drehachse oder um zueinander parallele Drehachsen rotieren.

6. Verfahren nach einem der vorherigen Ansprüche,
**dadurch gekennzeichnet,**
**dass** der Lichtstrahl (LS) mittels einer Laserlichtquelle (S) erzeugt wird.

7. Verwendung des Verfahrens nach einem der vorherigen Ansprüche zur Abstandsermittlung in einem System zur Unterstützung des Fahrers eines Kraftfahrzeugs.

## Claims

1. Method for optically scanning a scene (B) by means of a scanning light beam (LS),
a) wherein the scanning light beam (LS) is diverted by total reflection on a lateral wall of a rotating prism (PS) toward the scene to be scanned (B) and moved over the scene (B) by rotating the prism (PS);
**characterized in that**
the prism and its rotational axis are oriented relative to the light beam in such a manner that the light beam
b1) penetrates a first lateral face of the prism, wherein the light beam is refracted depending on the relative position of the prism;
b2) is diverted by said total reflection on a second lateral face, wherein the angle of reflection of the light beam inside the prism is varied by rotating the prism; and
b3) emerges from a third lateral face, wherein the light beam is again refracted depending on the relative position of the prism.

2. Method according to claim 1,
**characterized in**
**that** the scanning light beam (LS), after its diversion inside the rotating prism (PS), is projected onto the scene (B) via a lens device (OS).

3. Method according to claim 1 or 2,
**characterized in**
**that** a portion (LE) of the scanning light beam (LS) is diverted by total reflection on a lateral wall of the rotating prism (PS) or of an additional rotating prism (PE) toward a photodetector (E), wherein said portion (LE) is reflected on the scene and said prism (PE) is of the same kind as the prism (PS).

4. Method according to claim 3,
**characterized in**
**that** the portion (LE) of the scanning light beam (LS) is projected onto the photodetector (E) via an additional lens device (OS) and the rotating prism (PS) or the additional rotating prism (PE), wherein said portion (LE) is reflected on the scene (B) toward the photodetector (E).

5. Method according to any one of the claims 3 or 4,
**characterized in**
**that** the rotating prism (PS) and the additional rotating prism (PE) rotate at the same rotational speed around the same rotational axis or around rotational axes arranged parallel to each other.

6. Method according to any one of the preceding claims,
**characterized in**
**that** the light beam (LS) is generated by means of a laser light source (S).

7. Use of the method according to any one of the preceding claims for distance determination in a system for supporting the driver of a motor vehicle.

## Revendications

1. Procédé de balayage optique d'une scène (B) avec un rayon lumineux de balayage (LS),
a) le rayon lumineux de balayage (LS) étant dévié par réflexion totale sur la scène à balayer (B) au niveau d'une paroi latérale d'un prisme rotatif (PS) et étant déplacé sur la scène (B) par rotation du prisme (PS),
**caractérisé en ce que**
le prisme et son axe de rotation sont alignés par rapport au rayon lumineux de sorte que le rayon lumineux
b1) pénètre, au niveau d'une première surface latérale, dans le prisme, le rayon lumineux étant réfracté en fonction de la position angulaire du prisme,
b2) est dévié par réflexion totale au niveau d'une deuxième surface latérale, l'angle de réflexion du rayon lumineux dans le prisme variant avec la rotation du prisme, et
b3) sort au niveau d'une troisième surface latérale, le rayon lumineux étant de nouveau réfracté en fonction de la position angulaire du prisme.

2. Procédé selon la revendication 1,
**caractérisé en ce que**
le rayon lumineux de balayage (LS), après sa déviation dans le prisme rotatif (PS), est reproduit sur la scène (B) via un dispositif de lentilles (OS).

3. Procédé selon la revendication 1 ou 2,
**caractérisé en ce que**
une proportion (LE), réfléchie au niveau de la scène, du rayon lumineux de balayage (LS) est déviée par réflexion totale sur un photodétecteur (E) au niveau d'une paroi latérale du prisme rotatif (PS) ou d'un autre prisme rotatif (PE) de même type que le prisme rotatif.

4. Procédé selon la revendication 3,
**caractérisé en ce que**
la proportion réfléchie (LE), au niveau de la scène (B) en direction du photodétecteur (E), du rayon lumineux de balayage (LS) est reproduite sur le photodétecteur (E) via un autre dispositif de lentilles (OS) et le prisme rotatif (PS) ou l'autre prisme rotatif (PE).

5. Procédé selon la revendication 3 ou 4,
**caractérisé en ce que** le prisme rotatif (PS) et l'autre prisme rotatif (PE) tournent avec la même vitesse de rotation autour du même axe de rotation ou autour d'axes de rotation parallèles entre eux.

6. Procédé selon l'une des revendications précédentes,
**caractérisé en ce que**
le rayon lumineux (LS) est produit au moyen d'une source de lumière laser (S).

7. Utilisation du procédé selon l'une des revendications précédentes pour la détermination d'intervalle dans un système d'assistance au conducteur d'un véhicule automobile.
